# EUROPÄISCHE PATENTSCHRIFT

(11) **EP 0 458 083 B1**
(45) Veröffentlichungstag und Bekanntmachung des Hinweises auf die Patenterteilung: **13.07.1994**
(21) Anmeldenummer: 91106751.0
(22) Anmeldetag: 26.04.1991
(51) Int. Cl.: B60J 7/22

(54) **In einer Dachöffnung eines Kraftfahrzeuges aufgenommener Deckel**
Lid received in a roof opening of a motor vehicle
Couvercle incorporé dans l'ouverture du toit d'un véhicule automobile

(30) Priorität: 25.05.1990 DE 4016791
(43) Veröffentlichungstag der Anmeldung: 27.11.1991
(73) Patentinhaber: AUDI AG, 85045 Ingolstadt (DE)
(72) Erfinder: Wiedemann, Jochen, Dr., W-8074 Gaimersheim (DE); Betz, Siegfried, W-8071 Wettstetten (DE); Licklederer, Hermann, W-8079 Hitzhofen (DE)
(74) Vertreter: Engelhardt, Harald

(56) Entgegenhaltungen:
- DE-A- 3 100 757
- DE-A- 3 103 062
- DE-A- 3 442 616
- DE-A- 3 506 009
- DE-U- 1 932 991
- US-A- 4 422 687

## Beschreibung

Die Erfindung bezieht sich auf einen ausstellbaren Deckel gemäß dem Oberbegriff des Patentanspruchs 1.

Es sind Dichtungen für die Hinterkante eines ausstellbaren Deckels, welcher in einer Dachöffnung eines Kraftfahrzeuges aufgenommen ist, bekannt, wobei an der Dichtung eine Tropflippe angeformt ist, welche bei ausgestelltem Deckel nach unten in den Spalt zwischen der Hinterkante des Deckels und dem Dach ragt. Die Tropflippe soll dabei sicherstellen, daß bei geschlossenem Deckel eindringendes Wasser in die im Randbereich der Dachöffnung umlaufende Regenrinne tropft. Oft wird die Tropflippe nicht um den Deckel umlaufend ausgeführt, sondern nur im Bereich seiner Hinterkante. Es hat sich nämlich gezeigt, daß ohne eine solche Tropflippe durch das Gebläse einer Fahrzeugwaschanlage Wasser zwischen der Hinterkante des Deckels und der Dachöffnung hineingedrückt werden kann und dabei über die Regenrinne hinaus in das Fahrzeuginnere gelangt.

Aus der DE-A-3 442 616 ist ein Deckel mit flächigen Ansätzen bekannt, welche sich bei ausgestelltem Deckel nach unten erstrecken. Die Ansätze sind an den seitlichen Rändern des Deckels angebracht und dienen dazu, bei ausgestelltem Deckel die Seitenspalte zwischen den Seitenrändern der Dachöffnung und dem Deckel abzudichten.

Ein immer wiederkehrendes Problem in Verbindung mit ausstellbaren Deckeln ist die damit verbundene Geräuschentwicklung. Abhängig von der Fahrgeschwindigkeit und dem Ausstellwinkel können Heul- oder Pfeifgeräusche auftreten, die in der Umströmung des Deckels und dem Absaugen von Innenraumluft über den Deckelspalt begründet sind.

Der Erfindung liegt die Aufgabe zugrunde, mit baulich einfachen Mitteln wirkungsvoll einer Geräuschentwicklung bei ausgestelltem Deckel entgegenzuwirken.

Die Aufgabe wird durch die kennzeichnenden Merkmale des Patentanspruchs 1 gelöst.

In umfangreichen Versuchen hat sich gezeigt, daß die unerwünschten Heul- und Pfeifgeräusche dadurch unterbunden werden können, wenn an der Hinterkante des Deckels ein flächiger Ansatz angeordnet wird, welcher sich bei ausgestelltem Deckel nach unten oder nach hinten erstreckt und an dem freien Ende des Ansatzes mehrere, nebeneinander angeordnete und den Ansatz verlängernde, flächige Vorsprünge ausgebildet werden.

Aus dem DE-U- 19 32 991 ist ein Windabweiser für Schiebedächer von Fahrzeugen bekannt, wobei am oberen Rand des Windabweisers Vorsprünge vorgesehen sein können. Durch diese Vorsprünge soll die im Fahrbetrieb auftretende Hauptströmung in mehrere Nebenströmungen aufgeteilt werden und dadurch bei geöffnetem Schiebedach auftretende Geräusche reduziert werden. Bei diesen Geräuschen handelt es sich jedoch nicht um Heul- oder Pfeifgeräusche, sondern um Druckschwingungen, welche auch als "Wummern" bezeichnet werden und als unangenehmes Dröhnen oder Brummen wahrgenommen werden. Bei dem vorgeschlagenen Deckel treten diese Probleme nicht auf, da dort Maßnahmen zur Geräuschreduzierung vorgeschlagen werden, wenn der Deckel ausgestellt und nicht in eine die Dachöffnung freigebende Position verschoben ist. Die vorgeschlagene Maßnahme findet sich auch nicht an einer Windleiteinrichtung.

In überraschender Weise hat man herausgefunden, daß die geräuschreduzierende Maßnahme an der Deckelhinterkante getroffen werden kann. Die Vorsprünge sind - im Gegensatz zu der vorbekannten Lösung - deshalb auch nicht nach außen zu der Fahrzeugumströmung gerichtet, sondern erstrecken sich in einem Bereich, der etwa zwischen der Deckelebene und einer senkrechten Ebene liegt.

Besonders vorteilhaft ist, wenn der die Vorsprünge aufweisende Ansatz einstückig an die Dichtung angeformt ist. Unter Umständen kann es auch zweckmäßig sein, die Vorsprünge an einem an der Hinterkante des Deckels zu befestigenden Zusatzteiles (z. B. einer Leiste) auszubilden. In beiden Fällen kann der Ansatz eine Tropflippe bilden, wenn dieser bei ausgestelltem Deckel nach unten ragt.

Die Ansprüche 3 bis 9 haben die besondere Ausbildung der Vorsprünge zum Gegenstand. Je nach den baulichen Gegebenheiten und dem verwendeten Material kann die Ausgestaltung der Vorsprünge zur Erzielung der gewünschten Eigenschaft zum Teil rechnerisch, aber auch empirisch ermittelt werden.

Besonders ist auf die Merkmale der Ansprüche 7 und 8 hinzuweisen, die sich bei Versuchsreihen als sehr günstig erwiesen haben. Danach sollen die Vorsprünge eine dreieckförmige Gestalt aufweisen, wobei die Spitze bevorzugt einen Winkel von 120° bis 150° einschließt. Die Winkel, die in dem Ausführungsbeispiel gemäß dem DE-U- 19 32 991 (etwa 45°) vorgegeben sind, haben sich als wenig vorteilhaft gezeigt, selbst wenn sie insgesamt zu einer Geräuschreduzierung geführt haben.

Der Ansatz mit den Vorsprüngen kann etwa senkrecht nach unten gerichtet sein oder sich auch etwa parallel zum Deckel nach hinten erstrecken. Stellungen zwischen diesen Positionen können von Fall zu Fall von Vorteil sein.

Ein Ausführungsbeispiel der Erfindung in der Zeichnung dargestellt und wird nachfolgend näher beschrieben. Es zeigt
- Fig. 1: einen Schnitt durch eine Dichtung für die Hinterkante eines ausstellbaren Deckels in einer Dachöffnung eines Kraftfahrzeuges und
- Fig. 2: die Ansicht Z aus Fig. 1.

Eine Dichtung 3 für die Hinterkante 5 eines ausstellbaren Deckels 7, von dem strichpunktiert nur ein Teil dargestellt ist, weist eine Hohlkammer 9 auf. Bei geschlossenem Deckel liegt der die Hohlkammer 9 außen begrenzende Abschnitt 11 der Dichtung 3 an der Dachöffnung (nicht dargestellt) an.

An die Dichtung 3 ist einstückig ein Ansatz 13 angeformt. Der Ansatz 13 ragt bei ausgestelltem Deckel 7 etwa senkrecht nach unten in den Spalt zwischen der Hinterkante 5 des Deckels 7 und der Dachöffnung bzw. einer an dieser umlaufend ausgebildeten Regenrinne (nicht dargestellt).

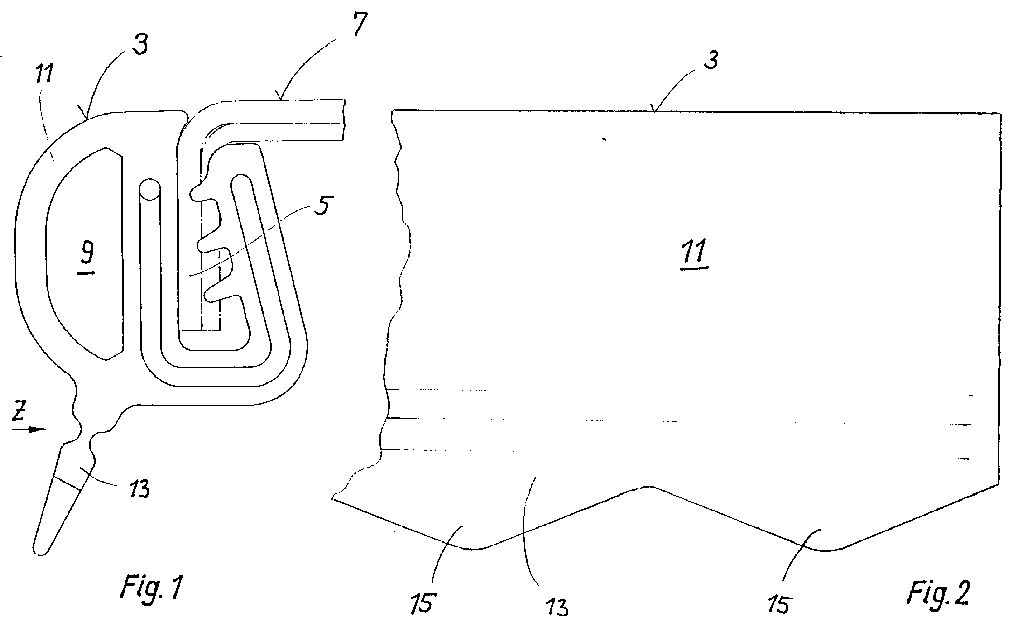

Wie Fig. 2 deutlich zeigt, weist der Ansatz 13 Vorsprünge 15 auf. Die Vorsprünge 15 erstrecken sich annähernd über die gesamte Breite der Hinterkante 5 des Deckels 7. Sie sind in regelmäßigen Abständen angeordnet und bilden durch ihre dreieckförmige Gestalt ein Sägezahnprofil. Die Spitze jedes Vorsprunges 15 schließt einen Winkel von etwa 140° ein.

Durch die Vorsprünge 15 werden Heul- und Pfeifgeräusche bei ausgestelltem Deckel 7 zuverlässig vermieden, da sie die kohärenten Strukturen zerstören, die sich durch den eine Pfeife bildenden ausgestellten Deckel eingestellt haben.

## Patentansprüche

1. In einer Dachöffnung eines Kraftfahrzeuges aufgenommener Deckel (7), dessen Hinterkante (5) nach außen von einer Schließstellung in eine Offenstellung bewegbar ist, dadurch gekennzeichnet, daß im Bereich der Hinterkante (5) an dem Deckel (7) ein flächiger Ansatz (13) angeordnet ist, welcher sich bei ausgestelltem Deckel (7) nach unten oder nach hinten erstreckt, und wobei an dem freien Ende des Ansatzes (13) mehrere, nebeneinander angeordnete und den Ansatz verlängernde, flächige Vorsprünge (15) ausgebildet sind, um die kohärenten Strukturen zu zerstören, die sich durch den eine Pfeife bildenden ausgestellten Deckel (7) einstellen.

2. Deckel nach Anspruch 1, mit einer im Bereich seiner Hinterkante angeordneten Dichtung, dadurch gekennzeichnet, daß der Ansatz (13) einstückig an die Dichtung (3) angeformt ist.

3. Deckel nach Anspruch 1, dadurch gekennzeichnet, daß der Ansatz (13) Bestandteil einer an der Hinterkante (5) festgelegten Leiste ist.

4. Deckel nach einem der Ansprüche 1 bis 3, dadurch gekennzeichnet, daß sich der Ansatz (13) und die Vorsprünge (15) etwa über die gesamte Breite der Hinterkante (5) erstrecken.

5. Deckel nach einem der Ansprüche 1 bis 4, dadurch gekennzeichnet, daß die Vorsprünge (15) in regelmäßigen Abständen angeordnet sind.

6. Deckel nach Anspruch 5, dadurch gekennzeichnet, daß die Vorsprünge (15) eine Wellenlinie bilden.

7. Deckel nach einem der Ansprüche 1 bis 5, dadurch gekennzeichnet, daß ein oder mehrere Vorsprünge (15) eine dreieckförmige Gestalt aufweisen.

8. Deckel nach Anspruch 7, dadurch gekennzeichnet, daß die Spitzen der Vorsprünge (15) einen Winkel von etwa 120° bis 150° einschließen.

9. Deckel nach Anspruch 7 oder 8, dadurch gekennzeichnet, daß die dreieckförmigen Vorsprünge (15) zur Bildung eines Sägezahnprofils unmittelbar nebeneinander angeordnet sind.

## Claims

1. Lid (7) accommodated in an opening in the roof of a motor vehicle, the rear edge (5) of which lid is adapted to be moved outwards from a closed position into an open position, characterised in that in the vicinity of the rear edge (5) the lid (7) features a flat lug (13) which extends downwards or rearwards when the lid (7) is in the vent position, and there being formed a plurality of flat projections (15) alongside one another on the free end of the lug (13) and extending the length thereof, in order to destroy the coherent structures that appear as a result of the lid (7) forming a whistle when in the vent position.

2. Lid according to claim 1, having a seal in the vicinity of its rear edge, characterised in that the lug (13) is moulded integrally onto the seal (3).

3. Lid according to claim 1, characterised in that the lug (13) is part of a strip set on the rear edge (5).

4. Lid according to any of claims 1 to 3, characterised in that the lug (13) and the projections (15) extend more or less the entire width of the rear edge (5).

5. Lid according to any of claims 1 to 4, characterised in that the projections (15) are spaced at regular intervals.

6. Lid according to claim 5, characterised in that the projections (15) form a wavy line.

7. Lid according to any one of claims 1 to 5, characterised in that one or more projections (15) are triangular in shape.

8. Lid according to claim 7, characterised in that the tips of the projections (15) enclose an angle of approximately 120° to 150°.

9. Lid according to claim 7 or 8, characterised in that the triangular projections (15) are disposed immediately alongside one another to form a saw-tooth profile.

## Revendications

1. Elément couvrant (7) qui est reçu dans une ouverture du toit d'un véhicule automobile et dont le bord arrière (5) est mobile vers l'extérieur depuis une position de fermeture vers une position d'ouverture, caractérisé en ce qu'il est disposé sur l'élément couvrant (7), dans la région de son bord arrière (5), un appendice plat (13) qui s'étend vers le bas ou vers l'arrière lorsque l'élément couvrant (7) est en position sortie, et en ce qu'il est formé, à l'extrémité libre de l'appendice (13), plusieurs saillies plates (15) qui sont disposées côte à côte et prolongent l'appendice, afin de briser les structures cohérentes qui apparaissent lorsque l'élément couvrant (7) est en position sortie et forme un sifflet.

2. Elément couvrant selon la revendication 1, comportant un joint d'étanchéité disposé dans la région de son bord arrière, caractérisé en ce que l'appendice (13) est formé d'une seule pièce avec le joint d'étanchéité (3).

3. Elément couvrant selon la revendication 1, caractérisé en ce que l'appendice (13) fait partie d'une baguette fixée au bord arrière (5).

4. Elément couvrant selon l'une quelconque des revendications 1 à 3, caractérisé en ce que l'appendice (13) et les saillies (15) s'étendent à peu près sur toute la longueur du bord arrière (5).

5. Elément couvrant selon l'une quelconque des revendications 1 à 4, caractérisé en ce que les saillies (15) sont disposées à intervalles réguliers.

6. Elément couvrant selon la revendication 5, caractérisé en ce que les saillies (15) forment une ligne ondulée.

7. Elément couvrant selon l'une quelconque des revendications 1 à 5, caractérisé en ce qu'une ou plusieurs saillies (15) présentent une forme triangulaire.

8. Elément couvrant selon la revendication 7, caractérisé en ce que les pointes des saillies (15) forment un angle d'environ 120 à 150°.

9. Elément couvrant selon la revendication 7 ou 8, caractérisé en ce que les saillies triangulaires (15) sont disposées immédiatement côte à côte, de manière à former un profil en dents de scie.
